Europäisches Patentamt

European Patent Office

Office européen des brevets

(11) Publication number: **0 137 235**
A2

# (12) EUROPEAN PATENT APPLICATION

(21) Application number: **84109782.7**

(22) Date of filing: **17.08.84**

(51) Int. Cl.⁴: **B 29 C 49/72**
B 29 C 69/00, B 65 B 3/02
B 65 D 1/26, B 65 D 17/00
B 29 L 22/00

(30) Priority: **25.08.83 IT 4159683**

(43) Date of publication of application:
**17.04.85 Bulletin 85/16**

(84) Designated Contracting States:
**AT BE CH DE FR GB LI LU NL SE**

(71) Applicant: ACQUA MINERALE SAN BENEDETTO S.p.A.
Viale Kennedy 65
I-30037 Scorze' (Prov. of Venezia)(IT)

(72) Inventor: de Polo, Giuliano
Via XX Settembre 34
I-31015 Conegliano (Treviso)(IT)

(72) Inventor: Zoppas, Enrico
Via Vittorio Emanuele 40
I-31015 Conegliano (Treviso)(IT)

(72) Inventor: Pamio, Natalino
Via Manzoni 10
I-30037 Scorze' (Venezia)(IT)

(74) Representative: Modiano, Guido et al,
MODIANO, JOSIF, PISANTY & STAUB Modiano &
Associati Via Meravigli, 16
I-20123 Milan(IT)

(54) Method of manufacturing plastic containers, and containers manufactured thereby.

(57) The method consists of providing a container made of a plastic material of the biorientable type, initially in bottle form (8), i.e. with the injected and blown portion thereof tapered to a narrower cross-section, thereafter a cut is made at a suitable location (12) to provide a container having a virtually constant cross-sectional area body (16), which is then completed with a cover or lid already incorporating an opening means of its own, e.g. of the tear-off type.

FIG.2a  FIG.2b  FIG.2c  FIG.2d

FIG.2

EP 0 137 235 A2

Croydon Printing Company Ltd.

"METHOD OF MANUFACTURING PLASTIC CONTAINERS, AND CONTAINERS MANUFACTURED THEREBY"

This invention relates to a method of manufacturing plastic containers, and in particular, containers shaped in the form of a can, the invention also relates to containers manufactured by this method.

For containing gaseous drinks, such as mineral water, orangeade, etc., it is widespread practice to use either glass or plastic bottles.

However, in most cases, plastic materials are known for being pervious to gases, which is the reason why they cannot be utilized to package gaseous drinks.

Some varieties of plastics, such as PET, PVC, or PETG, have the peculiarity that they can be bioriented during manufacture by stretching along two relatively orthogonal directions.

In this manner, such plastic materials can be imparted with adequate gas imperviousness so as to render them usable in the manufacture of containers for gaseous or still drinks.

Bottles have been produced heretofore by utilizing this technique, but other container types, such as can-like containers, have experienced some serious problems of orientation in the two relatively orthogonal directions.

The method used consisted of preparing an adequate amount of the material and injecting it through an extruder, thereafter the material was stretched first in one direction, e.g. by the action of a punch on its interior, and then blown to deform in an orthogonal direction to said one direction and adhere to a suitable mold interior to impart the final shape.

However, when such procedures are adopted, stretching along the two desired, relatively orthogonal directions is bound to be uneven throughout the bottle, particularly at the region between the bottle body and neck, which tapers toward the bottle mouth and shows markedly different stretch percentages along the two orthogonal directions. It is resultantly that very region which forms a weaker gas retaining barrier.

The phenomenon has been somewhat attenuated by providing this region with an increased thickness of material sufficient to achieve acceptable gas retention capabilities.

However, in the instance of a container having a constant cross-section, it would be impossible to achieve even cross stretching in the longitudinal direction, and as a result, the material would not provide a reliable barrier to prohibit gas propagation.

It is for this reason that no containers of the can type, such as are widely in use for packaging drinks, have been successfully manufactured in plastics, and are alternatively of metal construction.

It is an object of this invention to provide a method of manufacturing containers of can-like shape, i.e. with a substantially constant cross-section throughout its length, from plastic materials which are biorientable by stretching along two relatively orthogonal directions.

Another object of the invention is to provide an industrial method of manufacturing a low cost container by means of conventional, well proven equipment and technology.

It is a further object of the invention to provide a can-type container which exhibits uniform stretching of the plastic material along two relatively orthogonal directions, thereby enabling good gas retaining properties to be imparted thereto.

Still another object is to provide a container which utilizes a minimum quantity of material, in its manufacture, whilst maintaining throughout, good gas retaining properties.

A not unimportant object of the invention is to provide a manufacturing method which allows large volume production of containers at a proportionally much reduced cost relatively to the contents.

These and other objects, such as will be apparent hereinafter, are achieved by a method of manufacturing plastic containers, characterized in that it comprises the following steps:

(a) injection of a biorientable type plastic material into a mold having a substantially bottle-like internal shape;

(b) insertion of a multi-perforated punch into the mid-region of the injected plastic material to first stretch the material along an axis parallel to the longitudinal mid-axis of the mold;

(c) blowing air in, through said punch, to further stretch the material along radial directions transversely to said longitudinal mid-axis of said mold;

(d) obtainment of a bottle-like blank;

(e) trimming said blank along a flange formation projecting beyond the diameter of the bottle body to produce a can body;

(f) closure of said can body, after filling, by means of a clinched on cover or lid incorporating an independent opening means.

The invention relates also to containers manufactured by the above method, characterized in that a first blank of bottle-like shape has a substantially cylindrical or prismatic body closed at the bottom by a pressure-resisting bottom wall and having at the top a frusto-conical region, connected to the cylindrical body by a box-like annular flange formation the diameter whereof exceeds the diameter of the bottle-like body, said annular flange formation being then trimmed off to result in a can characterized in that it comprises a substantially cylindrical or prismatic body with a pressure-resisting bottom, said body having a substantially constant cross-sectional area and a flat annular top flange constituting a clinch-on means for a cover or lid previously formed with an independent opening means.

The plastic material type to be used is selected from those having biorientation properties and available commercially with such trade designations as PET, PVC or PETG amongst others.

Further features and advantages of the invention will be more readily understood from the following detailed description of a preferred embodiment, disclosed herein by way of illustration and not of limitation with reference to the accompanying drawings, where:

Figure 1 shows in views a) to e) a first sequence of process steps leading to the production of a bottle-like intermediate blank;

Figure 2 shows in views a) to d) a second sequence of process steps leading to the formation of a can body;

Figure 3 is a sectional view of the bottle-like intermediate blank to be obtained with this method;

Figure 4 is an exploded view showing the various parts to be obtained by the mechanical trimming operation;

Figure 5 is a perspective view of the bottle-like intermediate blank to be obtained with this method; and

Figure 6 is a perspective view of a can as obtained with this method.

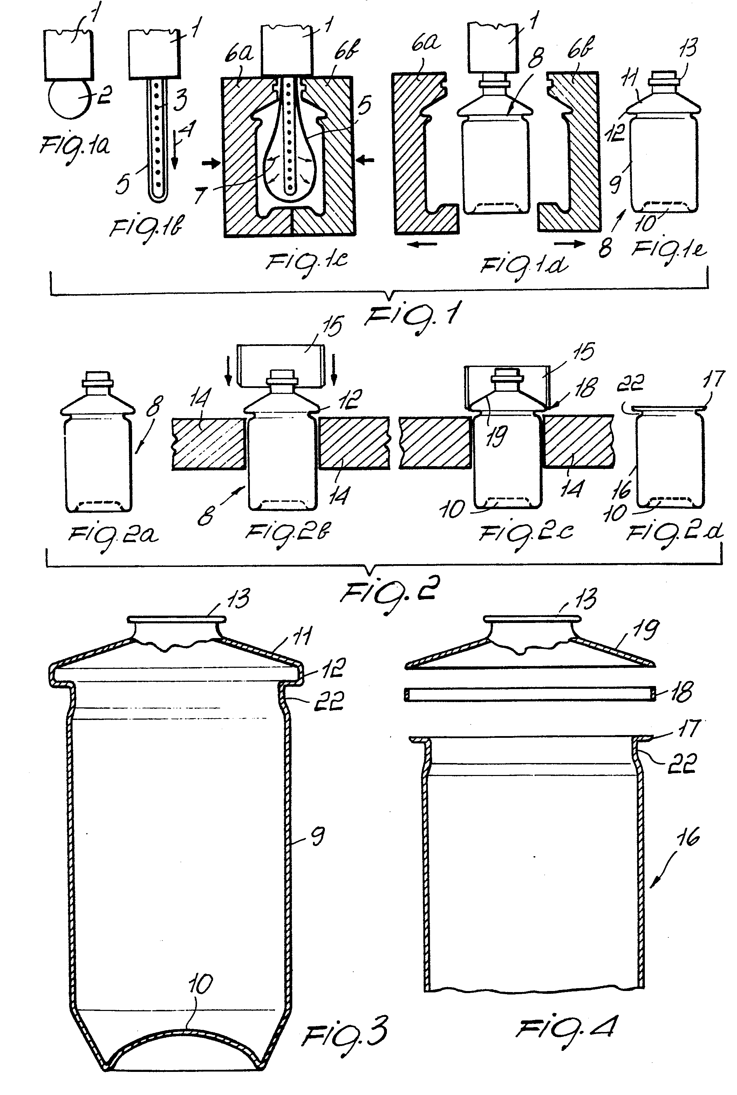

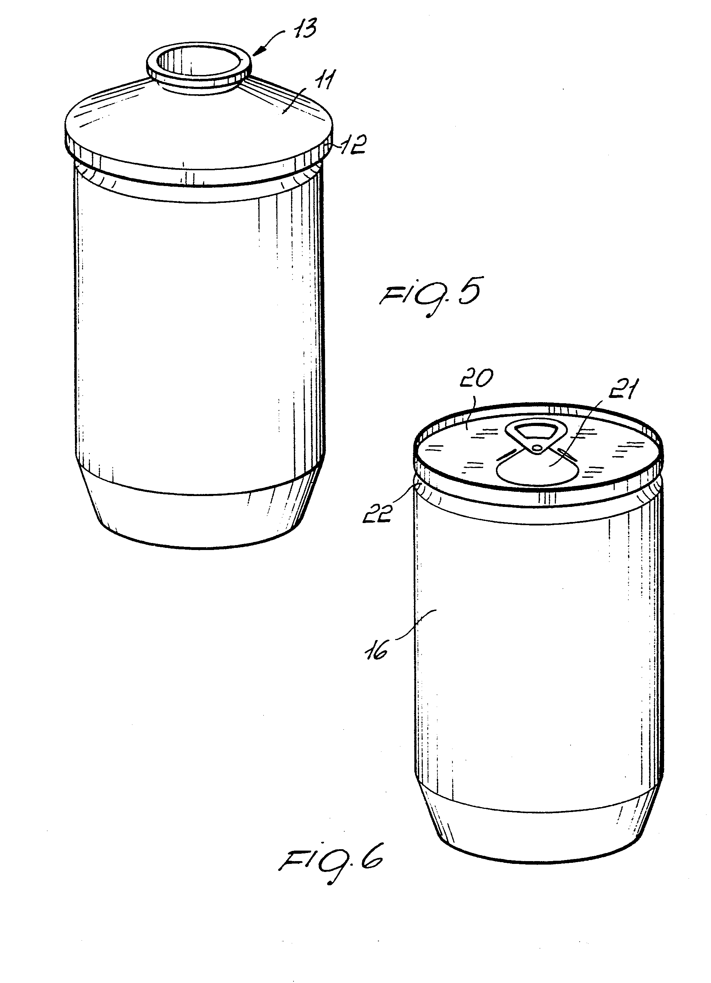

With reference to the drawing figures, the method of this invention comprises sequential steps schematically illustrated in Figures 1 and 2.

During the first step depicted in Figure 1a, an extruder 1 provides by injection a calculated amount of a thermoplastic material stretchable along two relatively orthogonal directions, indicated at 2.

That material is of a type known in the trade as PET, PVC or PETG, or any other types having similar properties.

Subsequently, during the step 1b, a perforated punch 3 is introduced through the material 2, which is thus stretched in the direction of the arrow 4 into the shape indicated at 5 and enclosing the punch 3.

During the next step shown in Figure 1c, the punch 3 with the stretched material 5 which is introduced into a mold comprising two halves 6a and 6b with a desired internal configuration substantially resembling a bottle, blows in air which inflates the material 5 along substantially transverse stretch directions indicated at 7 until the material 5 adheres to the internal surface of the mold.

After a convenient maturing period, the mold halves 6a and 6b are opened to release an intermediate blank 8 of bottle-like shape which has the peculiarity of comprising, as will be explained more clearly hereinafter, a cylindrical body 9 with a specially shaped pressure-resisting bottom 10 and having at the top a frusto-conical region 11 connected to the cylindrical body 9 by a box-like flange 12 which has a larger diameter than the diameter of the cylindrical body 9.

Said frusto-conical region is terminated at the top with a grip collar indicated at 13.

With these initial steps depicted in Figure 1, the method leads to the obtainment of an intermediate element indicated at 8 having a shape substantially like that of a bottle.

Proceeding now from the obtainment of said intermediate element 8, during the steps shown in Figure 2, it is inserted into a special cutting jig 14 such that the flange formation 12 bears on the face of said cutting jig 14.

An annular blade 15 is then lowered to cut through the box-like flange formation 12 and, meeting with the frusto-conical region 11 and then the flange 12, split the substantially bottle-like element 8 in three parts, that is a can body 16 which at this stage has a flat flange formation 17 and two disposable elements formed by a ring 18 and frusto-conical parts with collar now indicated at 19 (Figure 4).

Thus a can body is obtained which after filling will be closed with a metal cover or lid 20 provided with a tear-off opening device 21 (Figure 6).

In practice the method consists of an intermediate stage whereby a container is formed which has a substantially bottle-like shape and is then cut along a desired line to provide a container with a substantially constant cross-section without any taper at the upper portion thereby forming a can-like container.

Thus a can body is obtained wherein the utilized plastic material has been stretched along two relatively orthogonal directions.

In addition, the tapered frusto-conical portion, which is the critical portion in a bottle, is trimmed off and rejected.

Thus a can body is obtained wherein the gas retaining barrier is virtually uniform over its entire surface without the presence of substantially critical regions.

Advantageously, the can has a narrow portion 22 between the can body 16 and the flange formation 17, so that the cover, which has to be clinched around the flange formation 17, can have a diameter not exceeding the diameter of the can body.

In practice a can has been obtained which may be used as an alternative to metal cans in packaging gaseous or still drinks (wine,fruit juice, etc.).

The cutting mode, which in the illustrated instance envisages an annular blade cutter, may be of any type; thus a blade may be provided which is already a part of the forming mold which during the final step in translating with mechanical devices, effects a cut without the need to proceed to a subsequent operation with another machine.

The cut may be also effected with some other devices such as by using a laser.

It may also be convenient to form by stretching a very long bottle-like intermediate blank which may then be cut into several parts at several flange formation regions.

Thus with a single operation several can bodies can be prepared, the ends of said can bodies are then closed with one or two metal covers, as appropriate.

From the description and illustrations herein, it may be seen that all the objects proposed have been achieved and in particular that a method has been provided to obtain a can body of substantially constant cylindrical or prismatic cross-section, wherein the utilized plastic material is in all cases stretched along two relatively orthogonal or at least transverse directions, thereby enabling adequate gas retaining properties to be imparted thereto.

Thus the can may be used to package gaseous or still drinks of various description.

Of course, embodiments of containers obtained by methods based on the same inventive concept, may vary, as may the types of diverse materials employed providing they have the property of being stretchable along two substantially orthogonal or transverse directions to provide good gas imperviousness.

Also, any dimensions may be used contingent on requirements.

## CLAIMS

1. A method of manufacturing plastic containers, characterized in that it comprises the following steps:

(a) injection of a biorientable type plastic material into a mold having a substantially bottle-like internal shape;

(b) insertion of a multi-perforated punch into the mid-region of the injected plastic material to first stretch the material along a parallel axis to a longitudinal mid-axis of the mold;

(c) blowing air in, through said punch, to further stretch the material along substantially radial directions transversely to said longitudinal mid-axis of said mold;

(d) obtainment of a bottle-like blank;

(e) trimming said blank along a flange formation thereof to produce a can body;

(f) closure of said can body, after filling, by means of a clinched on cover member incorporating an independent opening means.

2. A method according to Claim 1, characterized in that said intermediate blank of bottle-like shape is formed from a plastic material which during the process steps is stretched along two substantially orthogonal directions, said plastic material being a biorientable such as PET, PVC of PETG.

3. A method according to Claim 1, characterized in that said intermediate blank is later cut at a desired region, said cut being effected by mechanical shearing or other cutting techniques.

4. A container manufactured as an intermediate product of the method according to the Claims 1-3, characterized in that it comprises a main body (9), a pressure-resisting bottom wall (10) connected to a bottom portion of said main body, at least one peripheral flange formation (12) on said main body (9) at an upper portion thereof opposite to said bottom portion, and a frusto-conical region (19) connected to said flange formation and tapering inwardly, said main body (9), bottom wall (10) at least one flange formation (12) and frusto-conical region (19) forming a single body.

5. A container according to Claim 4, characterized in that it is made of a bioriented plastic material.

6. A container according to Claim 4, characterized in that said peripheral flange formation (12) has cross-section dimensions exceeding the cross-section dimensions of said main body (9).

7. A container according to Claim 4, characterized in that it comprises a narrow portion (22) between said main body (9) and said peripheral flange formation (12).

8. A can manufactured by the method according to the Claims 1-3, characterized in that it comprises a main body (16) of selectable cross-section between circular and polygonal forms, a pressure-resisting bottom wall (10) connected to said main body at a bottom portion thereof, and an upper peripheral flange formation (17) on said main body (16) at an upper portion thereof opposite to said bottom portion and forming a single body together with said main body, said upper periperal flange formation (17) forming clinch-on means for a cover member (20) having independent opening means (21).

9. A can according to Claim 8, characterized in that said cover member (21) is a metal clinched-on type cover previously formed with an independent opening means (21).

10. A can according to Claim 8, characterized in that said bottom wall (10) is monolithic with said main body (16) and said at least one flange formation (17).

11. A can according to Claim 8, characterized in that it comprises a second peripheral flange formation at said bottom portion of said main body (16), said second flange formation forming clinch-on means for connection with said bottom wall (10).

12. A can according to Claim 8, characterized in that it has a substantially constant cross-section with a narrow portion (12) between said main body (16) and said peripheral flange formation (17).

0137235

Fig.1a  Fig.1b  Fig.1c  Fig.1d  Fig.1e

Fig.1

Fig.2a  Fig.2b  Fig.2c  Fig.2d

Fig.2

Fig.3  Fig.4

FiG.5

FiG.6